# EUROPEAN PATENT APPLICATION

(11) **EP 1 074 486 A1**
(43) Date of publication of application: **07.02.2001**
(21) Application number: 00116124.9
(22) Date of filing: 28.07.2000
(51) Int. Cl.: B65F 1/00, B65F 1/14, B30B 9/32, B30B 9/30

(54) **Electric domestic appliance for differentiated waste disposal**

(30) Priority: 05.08.1999 IT MO990172
(71) Applicant: Turatti, Christian, 41100 Modena (IT)
(72) Inventor: Turatti, Christian, 41100 Modena (IT)
(74) Representative: Modiano, Guido, Dr.-Ing.

(57) **Abstract**

An electric domestic appliance (1) for differentiated waste disposal comprises a box-like structure (2) which has, on its front face, in an upward region, a first opening (3), a second opening (4) and a third opening (5) for differentiated introduction of waste, respectively waste made of material such as plastics, metal and glass, means (6) for compacting the plastic and metal waste which are supported inside the structure and are respectively connected to the first and second openings, means (7) for crushing the glass waste which are supported inside the structure and are laterally adjacent to the compaction means and are connected to the third opening, and at least one container (8) which is open in an upward region for collecting the crushed and compacted waste and is arranged inside the structure and below the compaction means.

## Description

The present invention relates to an electric domestic appliance for differentiated waste disposal.

It is known that production, disposal and recovery of domestic and urban waste is one of the main environmental problems to be solved.

Up to a few years ago, waste of all kinds was indiscriminately collected in single containers, such as bags and the like, to be subsequently disposed in landfillsites and/or in incinerators.

This behavior has created sheer areas of waste material accumulation of uncontrollable size and has caused the emission of noxious fumes which have caused considerable damage to the equilibrium of the ecosystem.

The possibility to reuse and recycle some materials, such as paper, glass, plastics (PET, PVC, PP), aluminum and iron, in subsequent processing and manufacturing cycles, and the necessity to eliminate some kinds of product, such as expired drugs or exhausted batteries, by following particular procedures have induced the governments of the more highly industrialized nations to adopt a policy in favor of better protection of the environment, both by giving incentives to the activity of recycling and by promoting the creation of specialized disposal centers.

Differentiated waste disposal is the basis for the practical implementation of this policy and requires the close co-operation of all citizens.

However, said co-operation is still scarce and insufficient, although a taxation system linked to the number, weight and quality of the waste transfers has been provided and despite the fact that collection points comprising various distinguishable curbside bins have been installed and many education campaigns have been proposed.

Although citizens comply with these initiatives, they encounter numerous practical obstacles which make them very difficult and problematic to perform.

First of all, the individual consumer must collect, in his own home, the different waste in separate bags or bins which are bulky, occupy living space and, being opened often, are not very hygienic.

Moreover, bottles made of glass or rigid plastics, or cans, have an intrinsic volume which cannot be reduced easily or manually: in order to avoid excessive accumulations thereof, due to the above problems, the citizen is forced to increase the number of transfers to the respective curbside bins.

This leads to a waste of time and energy, also in view of the fact that the collection points are still few in number, are often distant from home and are not easily accessible to everyone except by means of one's own vehicle.

Besides, very bulky waste rapidly fills the curbside bins, which must therefore be emptied frequently and cause the onset of so-called secondary pollution caused by the exhaust emissions of vehicles assigned to the collection and transportation of said waste.

Currently, the lack of specific devices and adequate structures makes it difficult to provide differentiated waste disposal in practice, hinders the correct protection of the environment and limits all the potential for economic utilization of recovery and recycling activities.

The aim of the present invention is to eliminate the above-noted drawbacks and difficulties by providing an electric domestic appliance for differentiated waste disposal which allows to easily reduce the volume of the individual items of waste, to collect them separately in a smaller space, to ensure domestic order and hygiene and to make these operations very simple, rapid, safe and easy to perform.

An object of the present invention is to reduce the number of transfers to the individual curbside bins, with consequent saving of time, energy and drastic limitation of secondary pollution.

Advantageously, the present invention allows to facilitate and give incentive to differentiated waste disposal, with a consequent increase in the percentage of recoverable waste, a reduction of the waste to be disposed in landfillsites or at the incinerator, allowing to adopt adequate methods for this purpose, and application of a fair taxation system, all to the benefit of better respect and protection of the ecosystem.

Within the scope of this aim, another object of the present invention is to achieve the above aim and objects with a structure which is simple, relatively easy to provide in practice, safe in use, effective in operation and relatively low in cost.

These and other objects are achieved by the present electric domestic appliance for differentiated waste disposal, characterized in that it comprises a box-like structure which has, on its front face, in an upward region, a first, a second and a third openings for differentiated introduction of waste, respectively waste made of material such as plastics, metal and glass, means for compacting said plastic and metal waste which are supported inside this structure and are respectively connected to said first and second openings, means for crushing said glass waste which are supported inside said structure and are laterally adjacent to said compaction means and are connected to said third opening, and at least one container which is open in an upward region for collecting the crushed and compacted waste and is arranged inside the structure and below said compaction means.

Further characteristics and advantages of the present invention will become apparent from the following detailed description of a preferred but not exclusive embodiment of an electric domestic appliance for differentiated waste disposal, illustrated only by way of non-limitative example in the accompanying drawings, wherein:

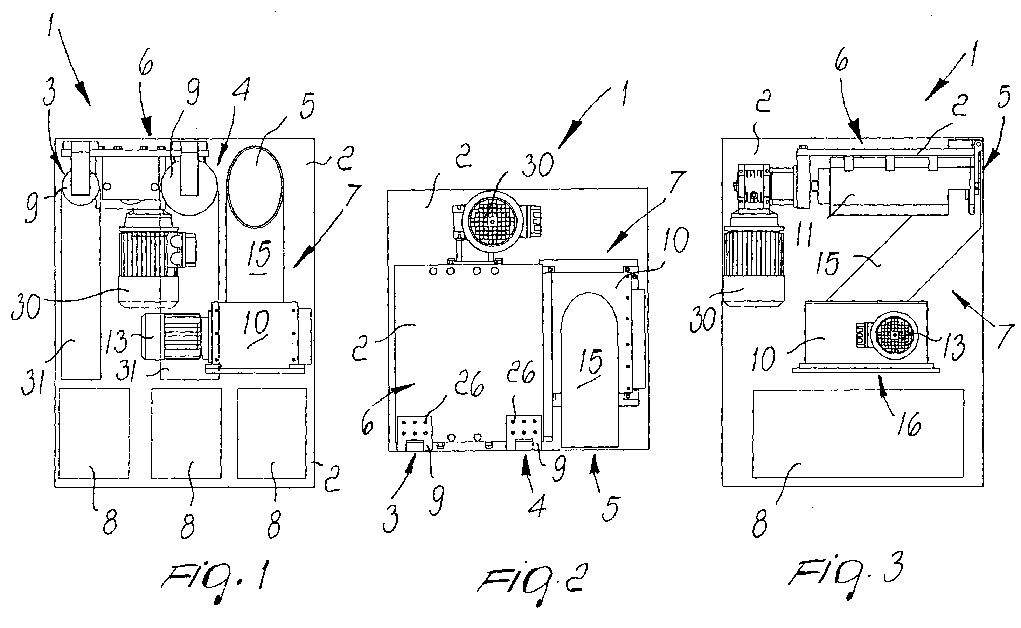

Figure 1 is a schematic front view of an electric domestic appliance for differentiated waste disposal according to the invention;
Figure 2 is a schematic plan view of the electric domestic appliance of Figure 1;

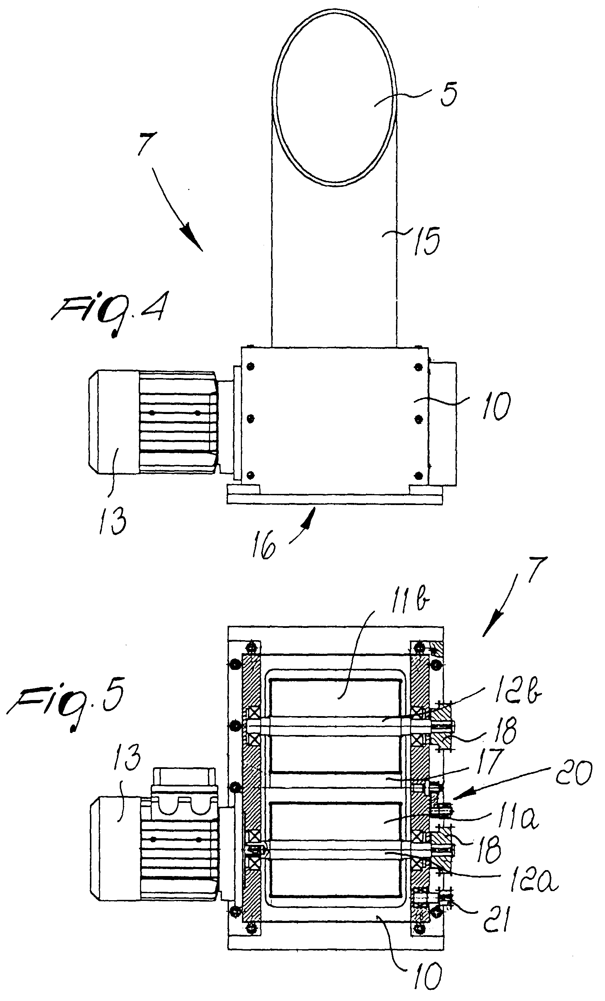

Figure 3 is a schematic side view of the electric domestic appliance of Figure 1;
Figure 4 is a schematic front view of the crushing means of the electric domestic appliance according to the invention;
Figure 5 is a sectional top view of the crushing means of Figure 4;

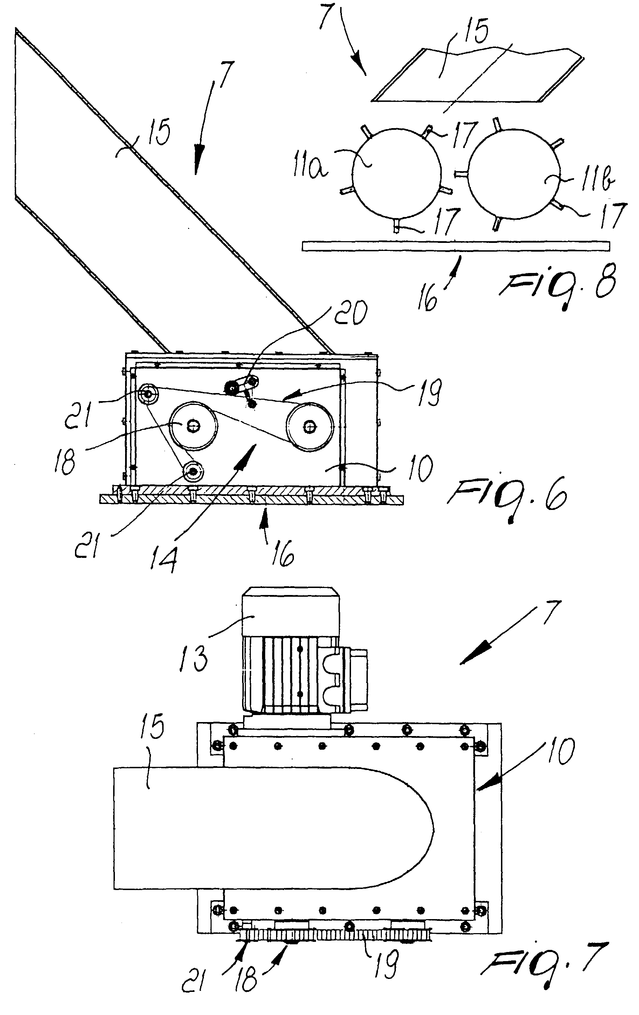

Figure 6 is a side view of the crushing means of Figure 4;
Figure 7 is a plan view of the crushing means of Figure 4;

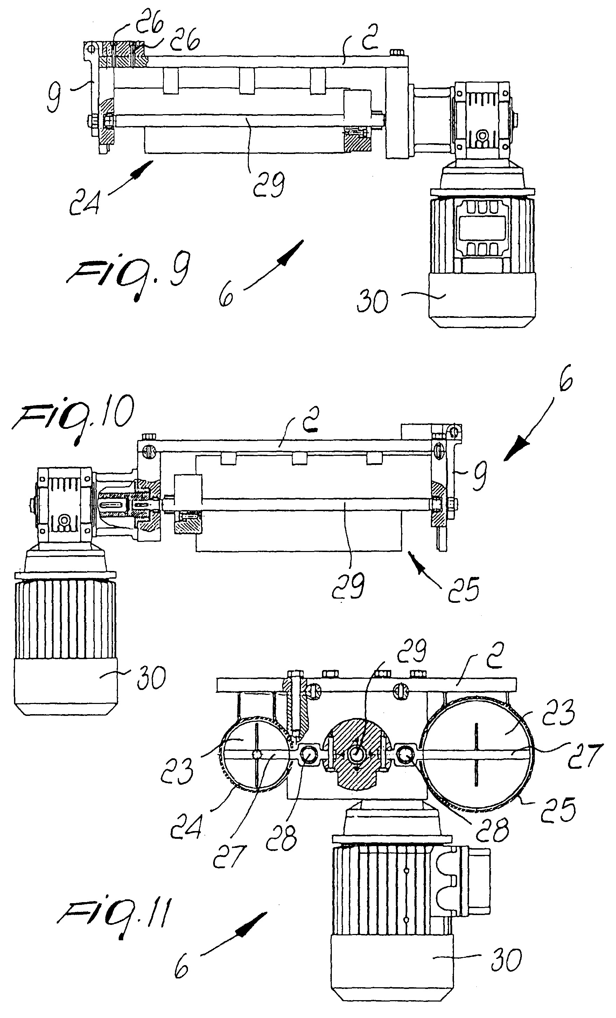

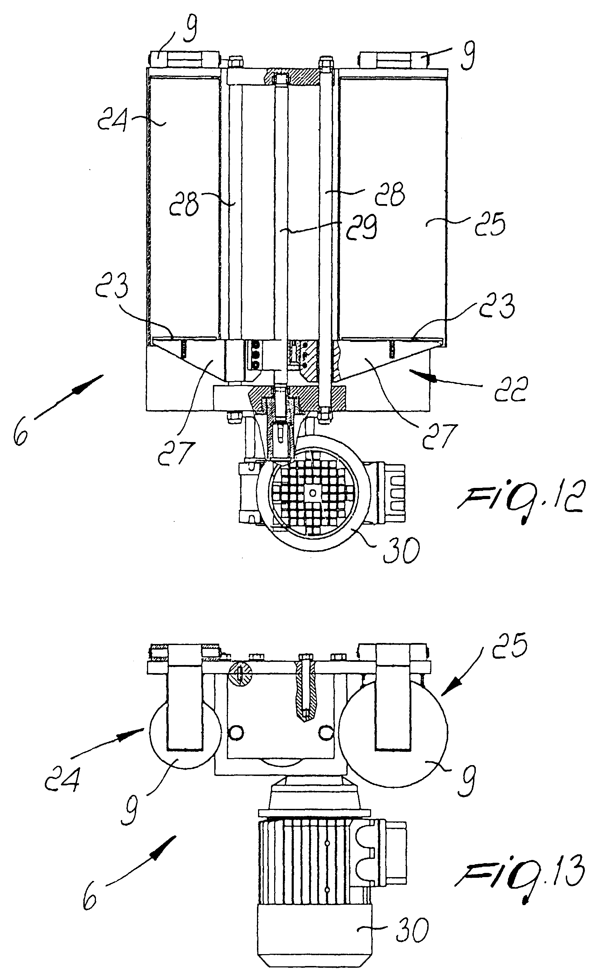

Figure 8 is a schematic front view of the rollers of the crushing means of Figure 4;

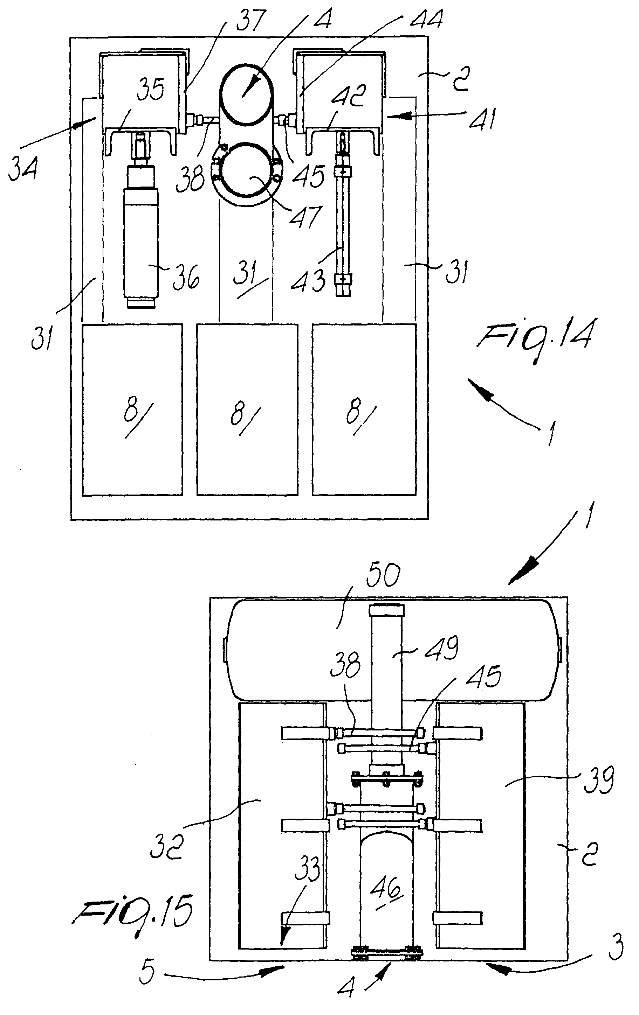

Figure 9 is a schematic and partially sectional side view of the metal waste compaction means of the electric domestic appliance according to the invention;

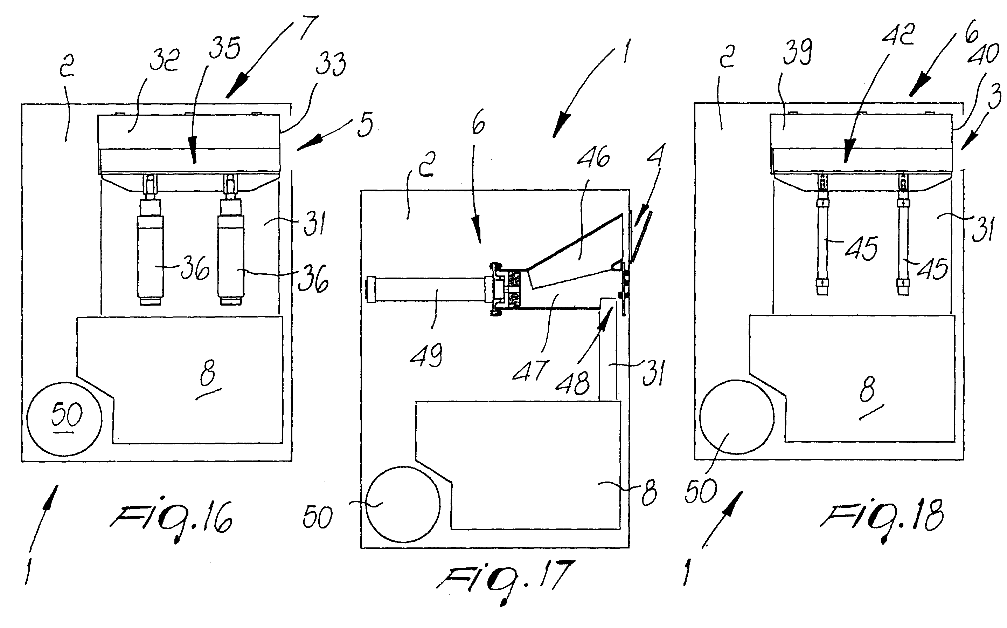

Figure 10 is a partially sectional schematic side view of the plastic waste compaction means of the electric domestic appliance according to the invention;
Figure 11 is a partially sectional front view of the compaction means of the electric domestic appliance according to the invention;
Figure 12 is a partially sectional plan view of the compaction means of Figure 11;
Figure 13 is a front view of the compaction means of the electric domestic appliance according to the invention;
Figure 14 is a schematic front view of an alternative embodiment of the electric domestic appliance according to the invention;
Figure 15 is a schematic plan view of the electric domestic appliance of Figure 14;
Figure 16 is a schematic side view of the crushing means of the electric domestic appliance of Figure 14;
Figure 17 is a schematic side view of the metal waste compaction means of the electric domestic appliance of Figure 14;
Figure 18 is a schematic side view of the plastic waste compaction means of the electric domestic appliance of Figure 14.

With reference to the above figures, 1 generally designates an electric domestic appliance for differentiated waste disposal.

The electric domestic appliance 1 comprises a box-like structure 2 which has, on its front face, in an upward region, a first opening 3, a second opening 4 and a third opening 5 for differentiated insertion of waste respectively made of materials such as plastics, metal and/or alloys thereof, and glass.

The box-like structure 2 is compact and can be provided in several shapes and constructive models which allow its perfect recessed insertion or its arrangement as a single and separate electric domestic appliance within furniture.

Plastic and metal waste compaction means 6 are supported inside the structure 2 and are respectively connected to the first opening 3 and to the second opening 4; glass waste crushing means 7 are further supported in structure 2, arranged to the side of the compaction means 6 and connected to the third opening 5.

At least one container and preferably respective containers 8, which are detachable and mutually independent, are arranged below the means 6 and 7 and are open in an upward region for the collection of crushed and compacted waste.

The three openings comprise respective closure lids 9 which are hinged to the supporting structure 2.

The crushing means 7 are constituted by a chamber 10 for supporting and containing a pair of rollers 11a and 11b which have parallel axes and can be rotationally actuated, the shaft 12a of the roller 11a being connected to motorization elements 13 and being connected to the shaft 12b of the roller 11b by virtue of motion transmission means 14.

The chamber 10 comprises, in an upward region, a duct 15 for connection to the third opening 5 and, in a downward region, a discharge outlet 16 for the crushed waste which is arranged proximate to the upper opening of the corresponding container 8.

Conveniently, each roller 11 comprises, on the lateral surface, a plurality of longitudinal vanes 17 which are distributed substantially radially and with a constant pitch and facilitate the crushing of the waste.

The transmission means 14 comprise a pair of pulleys 18 which are connected to the motorization elements 13 and flexible means 19 which are closed in a loop and wound around the pulleys 18.

In a possible embodiment, the means 19 are constituted by a belt with a double set of teeth provided with tensioning means (jockey pulleys) 20.

The pulleys 18 are fitted on the respective shafts 12 of the pair of rollers 11 and there are secondary pulleys 21 which are supported by the chamber 10.

The compaction means 6 comprise a movable frame 22 for supporting two compaction plates 23 which are slideable with a reciprocating motion within a first hollow cylinder 24 and a second hollow cylinder 25 which have parallel axes and are fixed to the structure 2.

The cylinders 24 and 25 have an end coinciding with the first and second openings 3 and 4 respectively, said ends being closed by the corresponding lids 9; the cylinders are open in a downward region proximate to the openings for the discharge of the compacted waste into the underlying containers 8.

The first cylinder 24 receives the plastic waste, while the second cylinder 25 receives the metal waste; the waste is compacted by the plates 23 against the lids 9 and discharged into the containers 8.

Advantageously, the lids are hinged in an upward region by means of pivots 26 so as to contrast the thrust applied by the plates during waste compaction.

The movable frame 22 comprises two arms 27 which are rigidly coupled one another and to the ends of which the plates 23 are fixed; said arms can slide along cylindrical guides 28 and are coupled to means 29 for producing reciprocating motion which are connected to respective motorization elements 30 and are constituted by a worm screw.

A plurality of mutually separate tubular ducts 31 connect the compaction and crushing means 6 and 7 to the corresponding underlying containers 8, so as to facilitate discharge of the waste.

Conveniently, the removable container 8 related to glass waste can be provided with a shaped additional discharge outlet which is insertable in the inlets of curbside collection bins.

The electric domestic appliance 1 can further contain a plurality of secondary containers for the differentiated disposal of paper, batteries, expired drugs and organic waste.

In the alternative embodiment of the electric domestic appliance 1 shown in Figures 14 to 18, the crushing means 7 comprise a first box-like compartment 32 (Figure 16) which is provided with a front aperture 33 for connection to the third opening 5 and with a lateral aperture 34 for discharging the crushed waste into the respective container 8.

A first horizontal plate 35 can slide vertically inside the first compartment 32 and is connected to first vertical means 36 for hydraulic or pneumatic actuation.

A first vertical plate 37 can slide horizontally inside the first compartment 32 and is connected to first horizontal means 38 for hydraulic or pneumatic actuation.

The horizontal plate 35 crushes the glass waste against the upper wall of the first compartment 32, while the vertical plate 37 pushes the crushed waste towards the lateral discharge aperture 34.

Likewise, the means 6 for compacting plastic waste comprise a second box-like compartment 39 (Figure 18) which is provided with a front aperture 40 for connection to the first opening 3 and with a lateral aperture 31 for discharging the compacted waste into the respective container 8.

A second horizontal plate 42 can slide vertically inside the second compartment 39 and is connected to second vertical hydraulic or pneumatic actuation means 43.

A second vertical plate 44 can slide horizontally inside the second compartment 39 and is connected to second horizontal hydraulic or pneumatic actuation means 45.

The horizontal plate 42 compacts the plastic waste against the upper wall of the second compartment 39, while the vertical plate 44 pushes the compacted waste towards the lateral discharge aperture 41.

The metal waste compaction means 6 (Figure 17) comprise an inclined duct 46 which has an end which is connected to the second opening 4 and is meant to convey the waste into a horizontal duct 47.

The duct 47 has a closed end at which there is, in a downward region, an aperture 48 for discharging the compacted waste, and a horizontal piston 49 can slide therein and allows to compact the waste against said closed end and to discharge it through the aperture 48.

The hydraulic or pneumatic actuation means 36, 38, 43 and 45 and the piston 49 are connected to a compressor 50.

In practice it has been observed that the above-described invention achieves the intended aim and objects.

It is in fact possible to perform compaction and differentiated disposal of the main home waste in a simple, practical, clean and hygienic way inside a single electric domestic appliance.

The invention thus conceived is susceptible of numerous modifications and variations, all of which are within the scope of the inventive concept.

All the details may further be replaced with other technically equivalent ones.

In practice, the materials employed, as well as the shapes and the dimensions, may be any according to requirements without thereby abandoning the scope of the protection of the appended claims.

The disclosures in Italian Patent Application No. MO99A000172 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An electric domestic appliance for differentiated waste disposal, characterized in that it comprises a box-like structure which has, on its front face, in an upward region, a first opening, a second opening and a third opening for differentiated introduction of waste, respectively waste made of material such as plastics, metal and glass, means for compacting said plastic and metal waste which are supported inside said structure and are respectively connected to said first and second openings, means for crushing said glass waste which are supported inside said structure and are laterally adjacent to said compaction means and are connected to said third opening, and at least one container which is open in an upward region for collecting the crushed and compacted waste and is arranged inside the structure and below said means.

2. The electric domestic appliance according to claim 1, characterized in that said openings comprise respective closure lids which are hinged to said supporting structure.

3. The electric domestic appliance according to claim 1, characterized in that said crushing means comprise a chamber for supporting and containing at least one pair of rollers with parallel axes which can be rotationally actuated, the shaft of one of said rollers being connected to motorization elements and being connected to the shaft of the other roller by virtue of motion transmission means.

4. The electric domestic appliance according to claim 3, characterized in that said chamber comprises, in an upward region, a duct for connection to said third opening and, in a downward region, an outlet for discharging the crushed waste which is arranged proximate to the upper opening of said container.

5. The electric domestic appliance according to claim 3, characterized in that each roller comprises, on its lateral surface, a plurality of longitudinal vanes which are distributed substantially radially and with a constant pitch.

6. The electric domestic appliance according to one or more of the preceding claims, characterized in that said motion transmission means comprise at least one pair of pulleys which are connected to said motorization elements and flexible means which are closed in a loop and are wound around said pulleys.

7. The electric domestic appliance according to one or more of the preceding claims, characterized in that said compaction means comprise a movable supporting frame for two compaction plates which can slide with a reciprocating motion inside a first hollow cylinder and a second hollow cylinder, which have parallel axes, are fixed to the structure, have an end which respectively coincides with said first and second openings and is closed by the corresponding lids, and are open in a downward region proximate to said end for discharging the compacted waste into the underlying container, the first cylinder being adapted to receive said plastic waste and the second cylinder being adapted to receive said metal waste, said plates being adapted to compact the waste against said lids.

8. The electric domestic appliance according to one or more of the preceding claims, characterized in that said movable frame comprises two arms which are mutually rigidly coupled and to the ends of which said plates are fixed, said arms being slideable along cylindrical guides and being coupled to means for producing reciprocating motion which are connected to respective motorization elements.

9. The electric domestic appliance according to one or more of the preceding claims, characterized in that said production means comprise a worm screw.

10. The electric domestic appliance according to one or more of the preceding claims, characterized in that said collection containers are three, are removable and are mutually independent.

11. The electric domestic appliance according to one or more of the preceding claims, characterized in that it comprises a plurality of secondary containers for the differentiated disposal of paper, batteries, expired drugs and organic waste.

12. The electric domestic appliance according to one or more of the preceding claims, characterized in that said crushing means comprise a first box-like compartment which is provided with a front opening for connection to said third opening and with a lateral aperture for discharging the crushed waste in said container, a first horizontal plate which can slide vertically inside said first compartment and is connected to first vertical hydraulic or pneumatic actuation means, and a first vertical plate which can slide horizontally inside said first compartment and is connected to first horizontal hydraulic or pneumatic actuation means, said first horizontal plate being adapted to crush the glass waste against the upper wall of said first compartment and said first vertical plate being adapted to discharge said crushed waste through said lateral aperture.

13. The electric domestic appliance according to one or more of the preceding claims, characterized in that said plastic waste compaction means comprise a second box-like compartment which has a front aperture for connection to said first opening and a lateral aperture for discharging the compacted waste in said container, a second horizontal plate which can slide vertically inside said second compartment and is connected to second vertical hydraulic or pneumatic actuation means, and a second vertical plate which can slide horizontally inside said second compartment and is connected to second horizontal hydraulic or pneumatic actuation means, said second horizontal plate being adapted to compact the plastic waste against the upper wall of said second compartment and said second vertical plate being adapted to discharge said compacted waste through said lateral aperture.

14. The electric domestic appliance according to one or more of the preceding claims, characterized in that said metal waste compaction means comprise a duct which is inclined and has an end which is connected to said second opening and is meant to feed the waste into an underlying horizontal duct which has a closed end and at which it has, in a downward region, an aperture for discharging the compacted waste, and a horizontal piston which can slide inside said horizontal duct and is adapted to compact the waste against said closed end.

15. The electric domestic appliance according to one or more of the preceding claims, characterized in that it comprises mutually separate tubular ducts for connection between said crushing and compaction means and said underlying container.
